Europäisches Patentamt

European Patent Office

Office européen des brevets

(11) Veröffentlichungsnummer : **0 485 941 A2**

# (12) EUROPÄISCHE PATENTANMELDUNG

(21) Anmeldenummer : **91119243.3**

(51) Int. Cl.⁵ : **C08L 23/20, C09K 3/10**

(22) Anmeldetag : **12.11.91**

(30) Priorität : **12.11.90 DE 9015482 U**

(43) Veröffentlichungstag der Anmeldung :
**20.05.92 Patentblatt 92/21**

(84) Benannte Vertragsstaaten :
**DE FR NL**

(71) Anmelder : **POPPE + CO. GIESSENER
GUMMIWARENFABRIK GMBH & CO. KG
Leihgesterner Weg 33-37 Postfach 6127
W-6300 Giessen (DE)**

(72) Erfinder : **Zander, Roland Dr.
Begonienweg 23,
W-6301 Reiskirchen (DE)**
Erfinder : **Schmidt, Horst-Werner
Anneröder weg 70
Giessen (DE)**

(74) Vertreter : **Missling, Arne, Dipl.-Ing.
Patentanwalt Bismarckstrasse 43
W-6300 Giessen (DE)**

(54) **Dichtung für Behälterverschlüsse.**

(57) Dichtungen für Behälterverschlüsse, die mit Lebensmitteln in Berührung kommen, beispielsweise für Verschlüsse an Flaschen, sind - damit sie geruchs- und geschmacksneutral bei längerer Einwirkungszeit durch Lebensmittel oder lebensmittelfremde Stoffe bleiben und auch durch Mikroorganismen oder dergleichen nicht beeinträchtigt werden - aus einem Butylkautschuk oder aus einem Butylkautschukverschnitt sowie in an sich bekannter Weise aus Füll- und Zuschlagstoffen hergestellt.

EP 0 485 941 A2

Jouve, 18, rue Saint-Denis, 75001 PARIS

Die Erfindung betrifft eine Dichtung für Behälterverschlüsse, die mit Lebensmitteln kontaktiert, beispielsweise für Verschlüsse an Flaschen.

Bei Flaschen zur Aufbewahrung von Lebensmitteln, wie Bierflaschen, Milchflaschen oder dergleichen, sind seit langem sog. Patentverschlüsse im Gebrauch, bei denen eine kreisscheibenförmige Dichtung durch einen federnden, handbetätigten Mechanismus für die Abdichtung des Lebensmittels sorgt, wenn der Mechanismus in eine stabile Verschlußstellung gebracht worden ist.

Eine derartige Dichtung besteht aus Weichgummi, wobei in einschlägigen Vorschriften bestimmte Bedingungen an den Dichtwerkstoff gestellt werden. Neben bestimmten physikalischen und chemischen Anforderungen sind als wichtige physiologische Eigenschaften Geruchs- und Geschmacksneutralität zu gewährleisten. Schließlich ist zu berücksichtigen, daß diese Art der Dichtung gewöhnlich längere Zeit mit dem abzudichtenden Lebensmittel kontaktiert, so daß die Auswahl bestimmter Grund- und Zusatzstoffe für eine solche Dichtung weiter beschränkt ist.

Eine Dichtung der eingangs bezeichneten Art ist nun aber unter Umständen auch noch Einflüssen ausgesetzt, die in entsprechenden Vorschriften und Empfehlungen zur Wahl des Dichtwerkstoffes noch nicht berücksichtigt sind. So ist es möglich, daß leere Flaschen mit solchen Dichtungen vom Verbraucher vor ihrer Rückführung zum Hersteller mißbräuchlich für artfremde Flüssigkeiten, wie Lösungsmittel, Benzin oder dergleichen oder für brennende oder glimmende Reste von Zigarren, Zigaretten oder ähnlichem verwendet werden. Auf diese Weise kann der Dichtwerkstoff einem u.U. länger dauernden Einfluß durch die aus diesen Stoffen austretenden Gase, Dämpfe und Rauche ausgesetzt sein, ohne daß dies später beim Hersteller zu bemerken ist; diese flüchtigen Stoffe diffundieren gegebenenfalls in den Dichtwerkstoff ein, widerstehen dem üblichen Reinigungsprozeß und belasten das neu verfüllte Lebensmittel in Bezug auf Geschmack und Geruch, wenn sie unter passenden äußeren Bedingungen wieder aus dem Dichtwerkstoff in das Lebensmittel übergehen.

Andererseits kann es auch bei bestimmungsgemäßem Gebrauch vorkommen, daß unerwünschte physiologische Einflüsse auftreten. Unter bestimmten äußeren Bedingungen - etwa bei länger anhaltender erhöhter Temperatur und/oder Luftfeuchtigkeit - können die im Lebensmittel enthaltenen Nährstoffe zur Ernährung sporenbildender Pilze, Hefen oder dergleichen dienen, die sich in kleinen Unregelmäßigkeiten in der Oberfläche der Dichtung ansiedeln können, wenn in deren Umfeld Reste des Lebensmittels verbleiben, beispielsweise durch geringe quellung des Dichtwerkstoffes oder durch Adsorption. Die Gefahr, daß trotz intensiver Reinigung ein Teil des so entstandenen Mikroorganismusstammes erhalten bleibt, kann nicht völlig ausgeschlossen werden.

Schließlich treten bei allen derartigen Einflüssen u.U. auch Farbänderungen an der Dichtung auf, die aus ästhetischen Gründen auch dann unerwünscht sind, wenn eine anderweitige Belastung des Dichtwerkstoffes sonst gar nicht nachgewiesen werden kann.

Es ist deshalb die Aufgabe der Erfindung, eine Dichtung für den dargestellten Zweck anzugeben, die sowohl den geltenden Vorschriften entspricht, als auch darüber hinausgehend diejenigen Mängel beseitigt, die durch mißbräuchlichen Gebrauch eintreten, oder durch Mikroorganismen oder dergleichen in Verbindung mit den in den abzudichtenden Behältern aufbewahrten Lebensmitteln hervorgerufen werden.

Erfindungsgemäß wird die Aufgabe durch die Verwendung eines Dichtwerkstoffes gelöst, wie er im Hauptanspruch in seinen wesentlichen Bestandteilen angegeben ist. Bevorzugte Mischungen und Anteile der einzelnen Komponenten sind in den Unteransprüchen enthalten.

Die Erfindung beseitigt die ausführlich geschilderten Nachteile des Standes der Technik mit überraschend einfachen Mitteln. Besonders beeindruckend ist es, daß es gelungen ist, die Einflüsse sowohl aus unsachgemäßei Verwendung der Behälter als auch eine etwa auftretende, unerwünschte mikrobiologische Einwirkung mit ein und der selben Werkstoffmischung zwar nicht auszuschalten, aber doch ihre schädliche Wirkung auf den Dichtwerkstoff zu verhindern. Es hat sich nämlich überraschend gezeigt, daß Butylkautschuk außer der bekannterweise emanenten hohen Gasdichtheit durch den erfindungsgemäßen Verschnitt mit anderen Komponenten auch noch resistent gegen viele Mikroorganismen gemacht werden kann. Offenbar wird bei dem nach der Erfindung hergestellten Dichtwerkstoff auch der Einfluß von Ozon und von ultravioletter Strahlung behindert, die sonst einzeln oder gemeinsam die Oberflächenstruktur angreifen und zum Teil zerstören, so daß (mit bloßem Auge nicht sichtbare) Risse oder andere Unregelmäßigkeiten entstehen, die wegen ihrer Form die Ansiedlung von Mikroorganismen begünstigen.

## Patentansprüche

1.  Dichtung für Behälterverschlüsse, die mit Lebensmitteln kontaktieren, beispielsweise für Verschlüsse an Flaschen, dadurch gekennzeichnet, daß die Dichtung aus einem Butylkautschuk oder aus einem Verschnitt eines Butylkautschuks sowie in an sich bekannter Weise aus Füll- und Zuschlagstoffen besteht.

2. Dichtung nach Anspruch 1, dadurch gekennzeichnet, daß der Butylkautschuk mit Ethylen-Propylen-Dien-Kautschuk verschnitten ist.

3. Dichtung nach Anspruch 1 und 2, dadurch gekennzeichnet, daß der Verschnitt des Butylkautschuks 10 - 60 Teile Ethylen-Propylen-Dien-Kautschuk enthält.

4. Dichtung nach Anspruch 1 bis 3, dadurch gekennzeichnet, daß der Verschnitt des Butylkautschuks 15 - 35 Teile Ethylen-Propylen-Dien-Kautschuk enthält.

5. Dichtung nach Anspruch 1 bis 4, dadurch gekennzeichnet, daß der Ethylen-Propylen-Dien-Kautschuk eine Dien-Komponente aus Dicyclopentadien, Ethylidennorbonen oder trans-Hexadien-1,4 enthält.

6. Dichtung nach einem der Ansprüche 1 bis 5, dadurch gekennzeichnet, daß als Füllstoff Aluminiumsilicat verwendet wird.

7. Dichtung nach einem der Ansprüche 1 bis 5, dadurch gekennzeichnet, daß als Füllstoff eine Mischung aus mindestens 30 Teilen, vorzugsweise aber 40 - 80 Teilen Aluminiumsilicat, 10 - 50 Teilen, vorzugsweise aber 20 - 40 Teilen gefällter Kieselsäure, 10 - 50 Teilen, vorzugsweise aber 10 - 30 Teilen Magnesiumaluminiumsilikathydrat und 5 - 25 Teilen, vorzugsweise aber 5 - 15 Teilen Titandioxid verwendet wird.

8. Dichtung nach Anspruch 7, dadurch gekennzeichnet, daß gefällte Kieselsäure mit einer spezifischen Oberfläche von mindestens 100 qm/g verwendet wird.

9. Dichtung nach Anspruch 1, dadurch gekennzeichnet, daß als Zuschlagsstoffe Verarbeitungshilfsmittel, anorganische und/oder organische Farbpigmente, Vulkanisationsmittel und/oder Aktivatoren enthalten sind.

10. Dichtung nach Anspruch 9, dadurch gekennzeichnet, daß als Verarbeitungshilfsmittel 5 - 30 Teile eines flüssigen Paraffins und bis zu 10 Teile eines mikrokristallinen Wachses verwendet werden.

11. Dichtung nach Anspruch 10, dadurch gekennzeichnet, daß 5 - 15 Teile eines flüssigen Paraffins verwendet werden.

12. Dichtung nach Anspruch 10, dadurch gekennzeichnet, daß 3 - 8 Teile eines mikrokristallinen Wachses verwendet werden.

13. Dichtung nach Anspruch 9, dadurch gekennzeichnet, daß als Vulkanisationsmittel 0,5 - 3,5 Teile Schwefel verwendet werden.

14. Dichtung nach Anspruch 13, dadurch gekennzeichnet, daß 1,5 - 2,5 Teile Schwefel verwendet werden.

15. Dichtung nach Anspruch 13, dadurch gekennzeichnet, daß Beschleuniger vom Typ Thiuram und Zink-N-dialkyldithiocarbamat enthalten sind.

16. Dichtung nach Anspruch 9, dadurch gekennzeichnet, daß als Aktivatoren Zinkoxid und/oder Stearinsäure verwendet werden.